# EUROPÄISCHE PATENTSCHRIFT

(11) **EP 3 961 180 B1**
(45) Veröffentlichungstag und Bekanntmachung des Hinweises auf die Patenterteilung: **27.11.2024**
(21) Anmeldenummer: 20193801.6
(22) Anmeldetag: 01.09.2020
(51) Int. Cl.: G01M 11/02, G01B 11/26

(54) **VERFAHREN ZUR VERMESSUNG OPTISCHER LINSENFLÄCHEN**
METHOD FOR MEASURING OPTICAL LENS SURFACES
PROCÉDÉ DE MESURE DES SURFACES DE LENTILLES OPTIQUES

(43) Veröffentlichungstag der Anmeldung: 02.03.2022
(73) Patentinhaber: Hofbauer, Engelbert, 81245 München (DE)
(72) Erfinder: Hofbauer, Engelbert, 81245 München (DE)
(74) Vertreter: Gagel, Roland

(56) Entgegenhaltungen:
- EP-B1- 1 636 542
- EP-B1- 3 037 800
- US-A1- 2013 027 692

## Beschreibung

### Technisches Anwendungsgebiet

Die vorliegende Erfindung betrifft ein Verfahren zur Vermessung optischer Linsenflächen, insbesondere zur Zentriermessung an asphärischen Linsen, bei dem die Linsenflächen in Reflexion mit einer optischen Messanordnung vermessen werden, in der eine die optische Messstrahlung begrenzende Apertur eingesetzt und unscharf als Lichtfleck auf einen optischen Detektor der Messanordnung abgebildet wird.

Bei der Herstellung asphärischer Linsen können durch Herstellungsfehler oder Herstellungstoleranzen Abweichungen von der gewünschten Asphärenform auftreten, die aus Gründen der Qualitätssicherung erkannt werden müssen. Dies kann mit einer berührungslosen Zentriermessung erfolgen, durch die ein Scheitelversatz und eine Achsverkippung der asphärischen Linse erfasst werden können. Bei der Zentriermessung wird zunächst die Lage des Krümmungsmittelpunktes (Scheitel) des sphärischen Anteils der asphärischen Linsenfläche bestimmt und anschließend am asphärischen Anteil, also dem Randbereich außerhalb des Scheitels, gemessen.

### Stand der Technik

Die EP 1918687 B1 beschreibt ein Verfahren zur Bestimmung der Lage einer Symmetrieachse einer asphärischen Linsenfläche relativ zu einer Bezugsachse, bei dem zunächst die Lage des Krümmungsmittelpunktes des sphärischen Anteils der Linsenfläche bestimmt und anschließend durch Drehung der Linse um eine Drehachse eine Taumelbewegung des asphärischen Anteils gemessen wird, um die Lage der Symmetrieachse der asphärischen Linsenfläche relativ zur Drehachse zu ermitteln. Die Messungen erfolgen mit Autokollimatoren über eine Reflexion an der zu vermessenden Linsenfläche.

Aus der EP 1636542 B1 sind ein Verfahren und eine Messvorrichtung zur berührungslosen Messung von Winkeln oder Winkeländerungen an Gegenständen bekannt, die sich unter anderem auch zur Vermessung asphärischer Linsen- oder Spiegelflächen einsetzen lassen. Bei diesem Verfahren wird mit einer ausgedehnten Lichtquelle ein optischer Messstrahl erzeugt, mit dem eine als Feldblende wirkende Blende durchleuchtet wird und der nach Reflexion an der zu vermessenden Fläche mit einem optischen Detektor erfasst wird. Die durchleuchtete Blende wird dabei über ein optisches System unscharf als Lichtfleck auf den optischen Detektor abgebildet. Durch Ermitteln der Lage des Blendenbildes in Bezug auf eine Referenzlage kann ein Winkel zwischen der vermessenen Fläche und einer optischen Achse des Messstrahls am Schnittpunkt der optischen Achse mit der vermessenen Fläche bestimmt werden.

Aus der EP 3037800 B1 ist ein Verfahren zur Vermessung optischer Linsenanordnungen anhand von Rückreflexen unterschiedlicher Linsenflächen bekannt, bei der eine relativ aufwändige Abbildungsoptik eingesetzt wird, um unterschiedliche Bildebenen an vermuteten Positionen der Krümmungsmittelpunkte der Linsenflächen zu erzeugen.

Die WO 2014/114444 A1 zeigt ein Verfahren zur Vermessung optischer Linsen mit Hilfe eines Autokollimationsfernrohrs, bei der einzelne Linsenflächen nacheinander jeweils durch Fokussierung auf die entsprechende Linsenfläche vermessen werden. Aus der US 7286212 B2 ist ein weiteres Verfahren zur Vermessung optischer Linsenflächen bekannt, bei dem für jede Linsenfläche eine getrennte Abbildungsoptik eingesetzt wird. Jede Linsenfläche wird hierbei jeweils nur von der Seite vermessen, zu der sie gerichtet ist.

Die Aufgabe der vorliegenden Erfindung besteht darin, ein Verfahren zur Vermessung optischer Linsenflächen einer optischen Linsenanordnung anzugeben, das eine schnelle Vermessung von wenigstens zwei Linsenflächen der optischen Linsenanordnung ohne aufwändige Abbildungsoptiken ermöglicht.

### Darstellung der Erfindung

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie den Ausführungsbeispielen entnehmen.

Bei dem vorgeschlagenen Verfahren wird mit einer ausgedehnten Lichtquelle ein optischer Messstrahl erzeugt, über eine optische Anordnung kollimiert, auf eine erste zu vermessende Linsenfläche einer optischen Linsenanordnung gerichtet und nach Reflexion an der ersten zu vermessenden Linsenfläche mit wenigstens einem ortsauflösenden optischen Detektor erfasst. Zwischen der Lichtquelle und dem optischen Detektor wird bei diesem Verfahren eine den Messstrahl begrenzende Apertur eingesetzt, die als vignettierende Feldblende wirkt und durch den Messstrahl unscharf als Lichtfleck, im Folgenden aufgrund der Reflexion an der ersten zu vermessenden Linsenfläche als erster Lichtfleck bezeichnet, auf den optischen Detektor abgebildet und mit dem optischen Detektor erfasst wird.

Die ausgedehnte Lichtquelle ist dabei so ausgebildet, dass sie eine gleichmäßige flächenhafte Leuchtdichte erzeugt, beispielsweise durch Nutzung einer oder mehrerer LEDs mit davor angeordneter Streuscheibe oder mit davor angeordnetem Kondensator oder auch einer davor angeordneten Kombination von Streuscheibe und Kondensator. Der ortsauflösende optische Detektor kann beispielsweise durch einen CCD- oder CMOS-Flächensensor gebildet sein. Selbstverständlich lassen sich auch andere ortsauflösende optische Detektoren einsetzen. Auch mehrere nebeneinander angeordnete ortsauflösende Detektoren sind möglich.

Die den optischen Messstrahl begrenzende Apertur wird vorzugsweise durch eine Blende mit fester oder mit einstellbarer Blendenöffnung gebildet. Sie kann auch durch eine geeignete Linsenfassung einer Linse der optischen Anordnung gebildet werden. Sie wird an geeigneter Stelle im Strahlengang des Messstrahls angeordnet, um die vignettierende Wirkung zur Erzeugung des unscharfen Lichtflecks auf dem Detektor zu erreichen, vorzugsweise in oder zwischen der optischen Anordnung zur Kollimation, vorzugsweise einer Autokollimationsoptik, und der optischen Linsenanordnung mit den vermessenden Linsenflächen. Bei der optischen Linsenanordnung kann es sich um eine einzelne Linse, beispielsweise eine ein- oder doppelseitige Asphäre, d.h. eine asphärische Linse mit einer asphärischen und einer sphärischen oder mit zwei asphärischen Linsenflächen, oder auch um eine Anordnung mehrerer voneinander beabstandeter Linsen handeln.

Bei dem vorgeschlagenen Verfahren wird nun mit dem optischen Detektor gleichzeitig mit der Erfassung des ersten Lichtflecks auch wenigstes ein zweiter Lichtfleck erfasst, der durch Reflexion des Messstrahls an einer weiteren Linsenfläche, im Folgenden als zweite Linsenfläche bezeichnet, der optischen Linsenanordnung erhalten wird. Auch dieser zweite Lichtfleck entsteht durch die Wirkung der den Messstrahl begrenzenden Apertur als vignettierende Feldblende und Abbildung dieser Apertur - nach Reflexion an der zweiten Linsenfläche - auf den optischen Detektor. Die mit dem optischen Detektor gleichzeitig erfassten Intensitätsverteilungen der beiden Lichtflecke werden dann ausgewertet, um den jeweiligen Winkel zwischen der ersten Linsenfläche und der optischen Achse des Messstrahls am Schnittpunkt der optischen Achse des Messstrahls mit der ersten Linsenfläche und zwischen der zweiten Linsenfläche und der optischen Achse des Messstrahls am Schnittpunkt der optischen Achse des Messstrahls mit der zweiten Linsenfläche zu bestimmen. Diese Bestimmung des Winkels kann in gleicher Weise erfolgen wie dies beispielsweise in der bereits genannten EP 1636542 B1 beschrieben ist. Aus einer Verschiebung des jeweiligen Lichtflecks gegenüber einer Bezugslage (Nulllage) kann dabei der jeweilige Winkel an der Messposition (Schnittpunkt zwischen optischer Achse des Messstrahls und Linsenfläche) ermittelt werden. Die vignettierende Wirkung der den Messstrahl begrenzenden Apertur ermöglicht eine sehr genaue Ermittlung der Lage des Lichtflecks über die durch den Lichtfleck erzeugte Intensitätsverteilung, die entlang einer durch das Zentrum des Lichtflecks gehenden Linie eine V-Form aufweist.

Bei dem vorgeschlagenen Verfahren wurde erkannt, dass bei Nutzung einer Messanordnung mit der vignettierenden Feldblende auch ein durch eine weitere, zweite Linsenfläche, auf die der Messstrahl nach Durchtritt durch die ersten Linsenfläche trifft, erzeugter Lichtfleck zusammen mit dem ersten Lichtfleck auf dem Detektor erfassbar ist und entsprechend ausgewertet werden kann. Bei der zweiten Linsenfläche kann es sich bspw. um die rückseitige Linsenfläche einer Linse oder auch - bei gekitteten Linsen - um eine innere Linsenfläche handeln. Die beiden Lichtflecke auf dem Detektor müssen für die Bestimmung der Winkel ausreichend voneinander unterscheidbar bzw. trennbar sein. Ist dies bei einer Messung nicht der Fall, so wird die Linsenanordnung bzw. Linse senkrecht zur optischen Achse des Messstrahls verschoben, bis die beiden Lichtflecke ausreichend unterscheidbar bzw. trennbar sind. Die Distanz der Verschiebung wird dabei geeignet erfasst und bei der Auswertung berücksichtigt. Mit dem vorgeschlagenen Verfahren lassen sich somit ohne eine zusätzliche oder aufwändige optische Anordnung wenigstens zwei Linsenflächen gleichzeitig hinsichtlich ihres Winkels zur optischen Achse des Messstrahls an der jeweiligen Messposition vermessen. Im Falle der Vermessung einer Asphäre lassen sich damit durch eine Messung am asphärischen Teil mit einer einzigen Rotationsmessung um wenigstens 180° die exakte Lage der Asphäre, insbesondere eine Dezentrierung und ein seitlicher Versatz ermitteln.

### Kurze Beschreibung der Zeichnungen

Das vorgeschlagene Verfahren wird nachfolgend anhand von Ausführungsbeispielen in Verbindung mit den Zeichnungen nochmals näher erläutert. Hierbei zeigen:
- Fig. 1: eine schematische Darstellung eines beispielhaften optischen Aufbaus, wie er bei der Durchführung des vorgeschlagenen Verfahrens eingesetzt werden kann;
- Fig. 2: ein Beispiel für den Einsatz dieses optischen Aufbaus bei der Vermessung einer Asphäre mit dem vorgeschlagenen Verfahren;
- Fig. 3: ein weiteres Beispiel für die Durchführung des vorgeschlagenen Verfahrens mit einem derartigen Aufbau;
- Fig. 4: ein Beispiel für die Vermessung einer Asphäre mit dem vorgeschlagenen Verfahren;
- Fig. 5: ein weiteres Beispiel für die Vermessung einer Asphäre mit dem vorgeschlagenen Verfahren; und
- Fig. 6a/b: Beispiele für die Vermessung einer doppelseitigen Asphäre mit dem vorgeschlagenen Verfahren.

### Wege zur Ausführung der Erfindung

Bei dem vorgeschlagenen Verfahren werden durch mindestens zwei zumindest teilweise reflektierende Linsenflächen, die sphärisch oder auch asphärisch ausgebildet sein können, jeweils unscharfe Austrittsluken als Bilder der bei dem Verfahren eingesetzten begrenzenden Apertur bzw. Aperturblende des optisch wirksamen Systems auf einem Detektor abgebildet. Um diese Art der Wirkung der Aperturblende als Feldblende zu gewährleisten, wird diese an geeigneter Stelle in dem Strahlengang des Messstrahls positioniert. Dabei ist das ausgesandte Mess- bzw. Objektstrahlenbündel nicht ortsfest wie z.B. beim klassischen Autokollimator mit Fadenkreuz. Als Objekt dient vielmehr eine ausgedehnte Lichtquelle (Objektleuchtfläche), die vorzugsweise mindestens die gleichen Abmessungen bzw. die gleiche Größe wie die Detektionsfläche des Detektors aufweisen sollte, so dass jeder Objektleuchtpunkt einer entsprechenden konjugierten Bildpunktlage entspricht, die durch die Mitte der Aperturblende mit einer entsprechenden Hauptstrahlneigung α korrespondiert. Dieser Winkel des Hauptstrahls wird bei der Detektion ermittelt und ausgewertet. Besonders bevorzugt wird die Objektleuchtfläche größer als die Detektionsfläche gewählt. Durch die prinzipbedingte unscharfe Abbildung der Austrittspupille des Gesamtsystems am Detektor können nun von unterschiedlichen Linsenflächen (bei in der Regel unterschiedlichen Radien) longitudinal verschiedene unscharfe Austrittsluken am Detektor ausgewertet werden. Wichtig ist hierbei nur, dass die Strahlen an den Linsenflächen unterschiedliche (trennbare) Flächenkippwinkel aufweisen. Dann können auch mehr als zwei Flächen detektiert werden. Zur Optimierung der Messung ist es vorteilhaft, die Strahldivergenz durch entsprechende Vorsatzlinsen anzupassen.

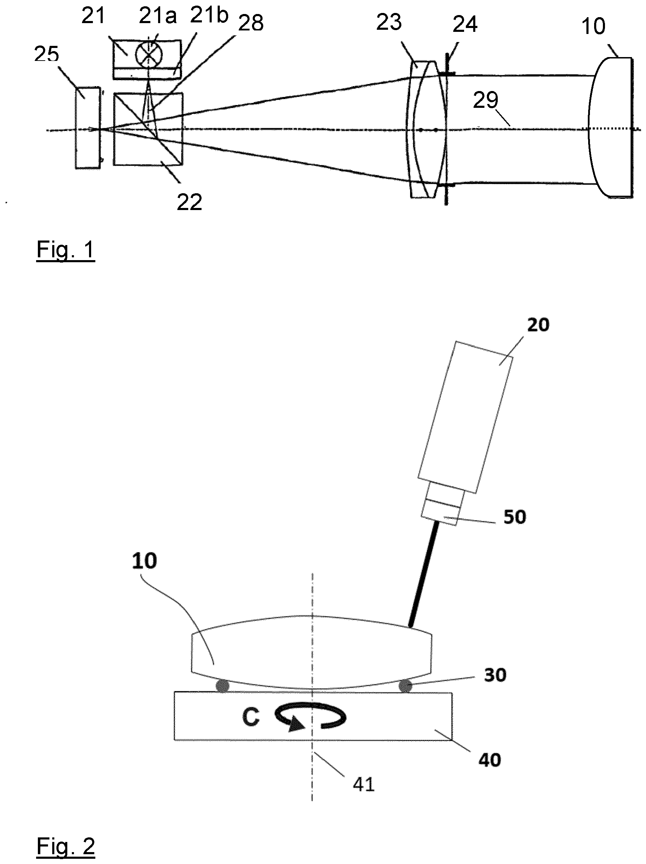

Figur 1 zeigt hierbei zunächst schematisch einen beispielhaften Aufbau des Messsystems, wie es beim vorgeschlagenen Verfahren eingesetzt werden kann. Die Figur zeigt eine ausgedehnte Lichtquelle 21, in der vorliegenden Patentanmeldung auch als flächenhafter Strahler bezeichnet, die in diesem Beispiel durch Bestrahlung einer Streulichtscheibe 21b von einer Strahlungsquelle 21a, beispielsweise einer LED, gebildet wird. Das von dieser ausgedehnten Lichtquelle 21 ausgehende Messstrahlbündel 28 wird über einen Strahlteiler 22 in das optische System eingestrahlt, um 90° abgelenkt und durchleuchtet die Aperturblende 24. An der zu vermessenden Linse 10 wird das Strahlbündel in sich reflektiert und über das Objektiv 23 nach erneutem Durchgang durch den Strahlteiler 22 auf den fotoempfindlichen Detektor 25 abgebildet. Eine Reflexion erfolgt hierbei nicht nur an der dem Messsystem zugewandten Linsenfläche der Linse 10, sondern auch an der dem Messsystem abgewandten Linsenfläche. Liegen die Linsenflächen am Schnittpunkt mit der optischen Achse 29 dieses Messsystems nicht exakt unter einem Winkel von 90° zu dieser Achse, so wird auf dem Detektor 25 für jede der Linsenflächen ein Lichtfleck abgebildet, der vom Schnittpunkt der optischen Achse 29 mit dem Detektor 25 abweicht. Der Lichtfleck entsteht dabei durch die vignettierende Wirkung der Aperturblende 24 und ermöglicht eine exakte Vermessung der Winkelabweichung vom 90°-Winkel, wie dies beispielsweise in der EP 1636542 B1 genauer beschrieben ist.

Figur 2 zeigt hierzu eine schematische Darstellung der Vermessung einer in diesem Fall sphärischen Linse 10 mit der Messanordnung der Figur 1, die in diesem und den folgenden Beispielen auch als Sensor 20 bezeichnet wird. Vor diesem Sensor 20 ist in diesen Beispielen eine Vorsatzlinse 50 zur Strahlformung angeordnet. Die zu vermessende Linse 10 wird für die Vermessung vorzugsweise auf eine Linsenaufnahme 30, beispielsweise eine Ringkante oder Dreipunktauflage, auf einem Drehtisch 40 aufgesetzt, der um eine Rotationsachse 41 drehbar ist (Drehung C). Die Linsenaufnahme 30 ermöglicht hierbei auch eine genaue Referenzierung des Sensors 20 zur zu vermessenden Linse, beispielsweise durch Aufsetzen einer polierten Kugel bekannter Präzision auf die Linsenaufnahme 30. Damit kann dann mit dem Sensor 20 oder auch einem ähnlichen, geeigneten Instrument, eine Bezugsachse bestimmt und die Linsenauflage als Bezugsfläche der zu vermessenden Linse referenziert werden.

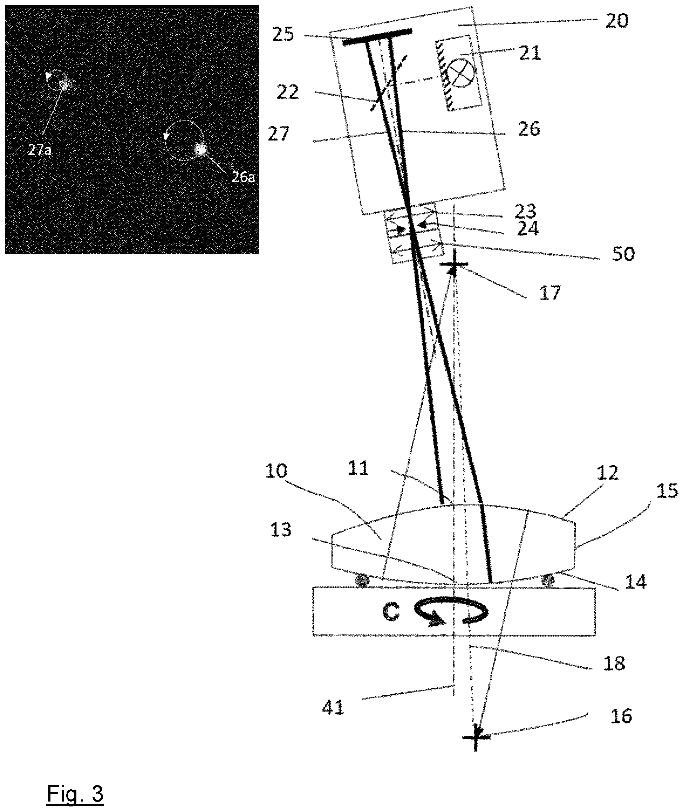

Figur 3 zeigt eine detailliertere Darstellung der Vermessung einer sphärischen Linse 10 mit dem Sensor 20 gemäß dem vorgeschlagenen Verfahren. In dieser Abbildung sind im Sensor 20 schematisch die ausgedehnte Lichtquelle 21, der Detektor 25, der Strahlteiler 22 sowie das Objektiv 23 und die Aperturblende 24 dargestellt. Auch die Vorsatzlinse 50 ist in dieser Darstellung erkennbar. Die zu vermessende sphärische Linse 10 liegt auf der Linsenaufnahme 30 auf dem Drehtisch auf. Die sphärische Linse 10 weist einen Scheitel 11, einen Randbereich 12, einen rückseitigen Scheitel 13, einen rückseitigen Randbereich 14 sowie einen Randzylinder 15 auf. Im vorliegenden Beispiel ist angedeutet, dass der Krümmungsmittelpunkt 16 der vorderen Linsenfläche und der Krümmungsmittelpunkt 17 der rückseitigen Linsenfläche auf der optischen Achse 18 der Linse liegen, die jedoch nicht mit der Rotationsachse 41 des Drehtisches übereinstimmt. In der Figur 3 sind zwei Hauptstrahlen 26, 27 angedeutet, die nach Reflexion an den beiden Linsenflächen aufgrund der Vignettierung durch die Aperturblende 24 als unscharfe Lichtflecke auf dem Detektor 25 erscheinen. Der vignettierende Hauptstrahl 26, der an der vorderen Linsenfläche reflektiert wird, führt dabei zu einem Lichtfleck 26a, der vignettierende Hauptstrahl 27, der an der rückseitigen Linsenfläche reflektiert wird, zu einem unscharfen Lichtfleck 27a auf dem Detektor. Der linke obere Teil der Figur 3 zeigt exemplarisch das Gesichtsfeld bzw. die Detektionsfläche des Detektors 25 mit den beiden Lichtflecken 26a, 27b bei eindeutiger lateraler Trennung, so dass beide gleichzeitig erfasst und ausgewertet werden können. Auf diese Weise lässt sich die Neigung der Linsenfläche am Schnittpunkt der optischen Achse des Messstrahls mit der jeweiligen Linsenfläche bestimmen. Bei einer Rotation des Drehtisches beschreiben beide Lichtflecke jeweils eine Kreisform mit entsprechendem Durchmesser, welcher mit dem realen (Vorderseite, Fläche 1) bzw. virtuellen (Rückseite, Fläche 2) Flächenkippwinkel korrespondiert. Die Kreisform ist im linken oberen Teil der Figur 3 im Gesichtsfeld des Detektors 25 angedeutet. Der reale Flächenkippwinkel der Rückseite kann über die gemessene optische Wirkung der ersten (vorderseitigen) Fläche (Radius, Brechzahl, Dicke) über ein Optik-Design-Programm rückwärtig berechnet werden. Die Winkelabweichungen können auch als seitlicher Versatz der Krümmungsmittelpunkte zur Drehachse interpretiert werden.

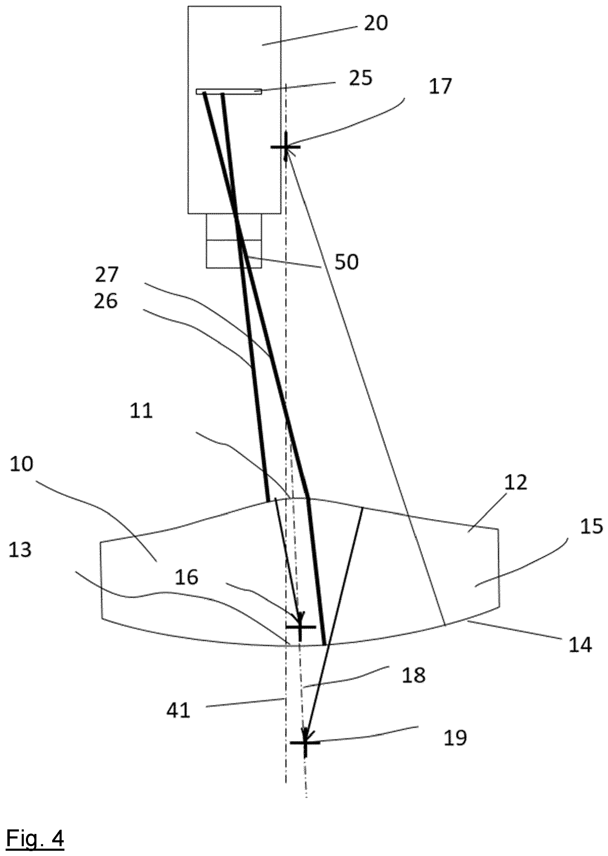

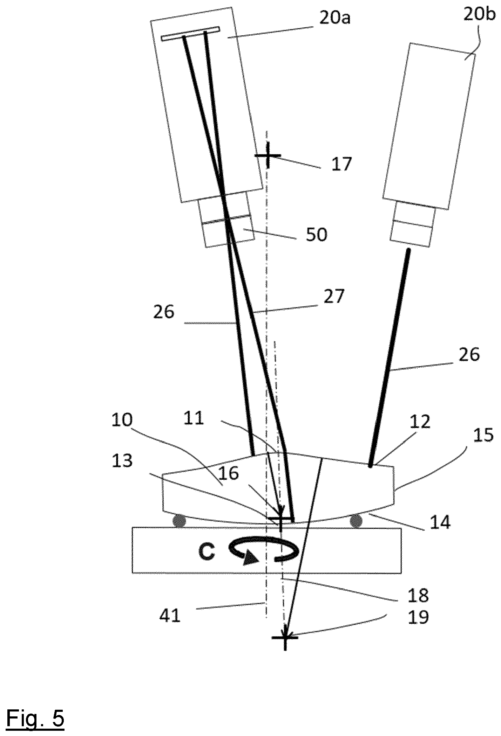

Bei der Vermessung von Asphären wird das Verfahren in gleicher Weise eingesetzt, wie in Figur 4 am Beispiel der Vermessung einer einseitigen Asphäre dargestellt ist. Eine Asphärenfläche hat nicht nur einen, sondern viele Krümmungsmittelpunkte, welche alle auf einer Achse liegen, die durch den Scheitel (Rotationssymmetriepunkt) verläuft. Eine Asphärenfläche hat eine Asphärenachse. Diese Achse kann zu einer Bezugsachse geneigt sein und der Scheitel bzw. Rotationssymmetriepunkt der Fläche, kann seitlich von der Bezugsachse verschoben sein. Figur 4 zeigt hierzu das Beispiel einer einseitigen Asphäre 10 (eine Seite Asphäre, andere Seite Sphäre) mit dem Scheitel 11 bzw. Zentralbereich der Vorderfläche der Asphäre und dem Randbereich 12 der Vorderfläche der Asphäre. Der Sensor 20 ist in dieser Figur nur vereinfacht mit dem Detektor 25 und der Vorsatzlinse 50 dargestellt. Die beiden an Vorder- und Rückseite der Asphäre 10 reflektierten Messstrahlen, vignettierter Hauptstrahl 26 und vignettierter Hauptstrahl 27 sind ebenfalls beispielhaft dargestellt. Die Asphäre 10 weist einen scheinbaren Krümmungsmittelpunkt 19 am Rand sowie einen Krümmungsmittelpunkt 16 des Scheitels auf. Die Asphärenachse 18 ist ebenfalls in der Figur dargestellt. Auch hier ergeben sich durch die Reflexion des Messstrahls an den beiden Linsenflächen der Asphäre zwei Lichtflecke auf dem Detektor 25, durch die die beiden Linsenflächen sowohl im Zentralbereich als auch am Rand vermessen werden können. Dies ist anhand der Figur 5 nochmals mit den gleichen Bezugszeichen anhand eines Beispiels dargestellt, bei dem zwei Sensoren 20a und 20b eingesetzt werden, um im Zentrum der Asphäre 10 und im Randbereich der Asphäre 10 gleichzeitig Messungen durchführen zu können.

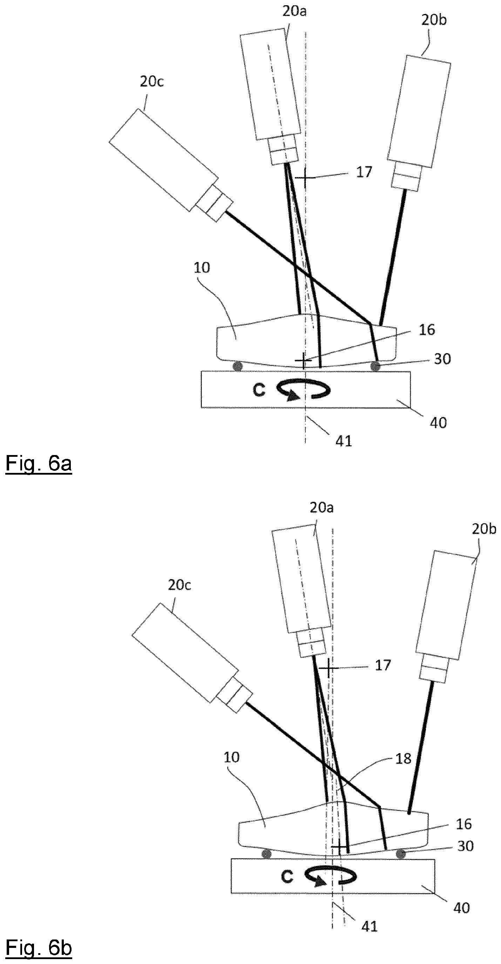

Bei doppelseitigen Asphären (Rückseite ebenfalls mit asphärischer Fläche) kann die Asphärenachse nicht mehr nur mit einer Messung im Zentrum hinreichend genau ermittelt werden. Hier ist die Messung an unterschiedlichen Stellen erforderlich, wie dies schematisch anhand der Figuren 6a und 6b mit einer zusätzlichen Messung der rückseitigen Fläche am Rand mit einem dritten Sensor 20c dargestellt ist. Vorzugsweise werden auch die beiden Messungen an der vorderseitigen und rückseitigen Fläche am Rand gemäß dem vorgeschlagenen Verfahren mit nur einem Sensor, bspw. Sensor 20b, gleichzeitig durchgeführt.

Die Bestimmung des inneren Zentrierfehlers einer asphärischen Linse kann bspw. mit folgenden Schritten erfolgen:
a) Referenzierung der Auflage (bzw. Linsenaufnahme 30) als Bezugsfläche der Linse bspw. mit Hilfe einer Kugel eines bevorzugten, angenähert gemittelten Radius der beiden Linsenflächen mit dem Sensor 20 oder einem ähnlichen, geeigneten Instrument, welches ohne Änderung von Vorsatzlinsen, einer Verschiebung des Instrumentes entlang der optischen Achse oder einer Fokusvariation die Krümmungsmittelpunkte der Linsenflächen zu vermessen vermag;
b) Messen der Lage des Krümmungsmittelpunktes des sphärischen Anteils der zu vermessenden asphärischen Linsenflächen;
c) Messen am asphärischen Anteil außerhalb des Scheitels (für beide Linsenflächen gleichzeitig);
d) Ermittlung des inhärenten, inneren Zentrierfehlers durch Verrechnung aus den beiden Messwerten zusammen mit Hilfe bekannter Designdaten (wie Radius, Dicke und Brechzahl).

Der Aufbau der optischen Anordnung zur Vermessung der Linsenflächen kann auch von dem Beispiel der Figur 1 abweichen, beispielsweise durch Vertauschung von Detektor und Lichtquelle, durch Einsatz eines anderen Strahlteilers, durch Anordnung der vignettierenden Feldblende an anderer Stelle oder durch andere Modifikationen, solange die vignettierende Wirkung der Feld- bzw. Aperturblende zur Erzeugung der unscharfen Lichtflecke auf dem Detektor gewährleistet bleibt.

### Bezugszeichenliste

- 10: Linse
- 11: Scheitel bzw. Zentralbereich der Linsenvorderfläche
- 12: Randbereich der Linsenvorderfläche
- 13: Scheitel bzw. Zentralbereich der Linsenrückfläche
- 14: Randbereich der Linsenrückfläche
- 15: Randzylinder der Linse
- 16: Krümmungsmittelpunkt der ersten Fläche
- 17: Krümmungsmittelpunkt der zweiten Fläche
- 18: optische Achse der Linse
- 19: scheinbarer Krümmungsmittelpunkt der Asphäre am Rand
- 20: Sensor
- 20a: erster Sensor
- 20b: zweiter Sensor
- 20c: dritter Sensor
- 21: ausgedehnte Lichtquelle
- 21a: Strahlungsquelle
- 21b: Streulichtscheibe
- 22: Strahlteiler
- 23: Objektiv
- 24: Aperturblende
- 25: fotoempfindlicher Detektor
- 26: vignettierender Hauptstrahl nach Reflexion an vorderer Linsenfläche
- 26a: Lichtfleck auf Detektor
- 27: vignettierter Hauptstrahl nach Reflexion an rückseitiger Linsenfläche
- 27a: Lichtfleck auf Detektor
- 28: Messstrahlbündel
- 29: optische Achse
- 30: Linsenaufnahme
- 40: Drehtisch
- 41: Rotationsachse
- 50: Vorsatzlinse

## Patentansprüche

1. Verfahren zur Vermessung optischer Linsenflächen, insbesondere zur Zentriermessung an asphärischen Linsen, bei dem
- mit einer ausgedehnten Lichtquelle (21) ein optischer Messstrahl (26, 27, 28) erzeugt, über eine optische Anordnung (23) kollimiert, auf eine erste zu vermessende Linsenfläche einer optischen Linsenanordnung (10) gerichtet und nach Reflexion an der ersten zu vermessenden Linsenfläche mit wenigstens einem ortsauflösenden optischen Detektor (25) erfasst wird,
- wobei zwischen der Lichtquelle (21) und dem optischen Detektor (25) eine den optischen Messstrahl (26, 27, 28) begrenzende Apertur (24) eingesetzt wird, die als vignettierende Feldblende wirkt und durch den Messstrahl (26, 27, 28) unscharf als erster Lichtfleck (26a) auf den optischen Detektor (25) abgebildet und mit dem optischen Detektor (25) erfasst wird,
- aus einer Intensitätsverteilung des ersten Lichtflecks (26a) auf dem optischen Detektor (25) und einer Verschiebung des Lichtflecks (26a) gegenüber einer Bezugslage (Nulllage) ein Winkel zwischen der ersten zu vermessenden Linsenfläche und einer optischen Achse des Messstrahls am Schnittpunkt der optischen Achse des Messstrahls mit der ersten zu vermessenden Linsenfläche bestimmt wird,
**dadurch gekennzeichnet,**
**dass** mit dem optischen Detektor (25) gleichzeitig mit der Erfassung des ersten Lichtflecks (26a) auch wenigstens ein zweiter Lichtfleck (27a) erfasst wird, der durch Reflexion des Messstrahls (26, 27, 28) an einer zweiten zu vermessenden Linsenfläche der optischen Linsenanordnung (10) erhalten wird, und
aus einer Intensitätsverteilung des zweiten Lichtflecks (27a) auf dem optischen Detektor (25) und einer Verschiebung des Lichtflecks (27a) gegenüber der Bezugslage (Nulllage) ein Winkel zwischen der zweiten zu vermessenden Linsenfläche und der optischen Achse des Messstrahls (26, 27, 28) am Schnittpunkt der optischen Achse des Messstrahls mit der zweiten zu vermessenden Linsenfläche bestimmt wird.

2. Verfahren nach Anspruch 1,
**dadurch gekennzeichnet,**
**dass** die optische Linsenanordnung (10) bei einer für die Bestimmung der Winkel nicht ausreichenden Unterscheidbarkeit des ersten (26a) und zweiten Lichtflecks (27a) auf dem optischen Detektor (25) senkrecht zur optischen Achse des verschoben wird, bis die Lichtflecke (26a, 27a) ausreichend unterscheidbar sind.

3. Verfahren nach Anspruch 1 oder 2,
**dadurch gekennzeichnet,**
**dass** als die den Messstrahl (26, 27, 28) begrenzende Apertur (24) eine Blende mit fester oder einstellbarer Blendenöffnung eingesetzt wird.

4. Verfahren nach einem der Ansprüche 1 bis 3,
**dadurch gekennzeichnet,**
**dass** als optische Anordnung (23) eine Autokollimationsoptik eingesetzt wird.

5. Verfahren nach einem der Ansprüche 1 bis 4,
**dadurch gekennzeichnet,**
**dass** die ausgedehnte Lichtquelle (21) mit einer Leuchtfläche bereitgestellt wird, die mindestens die Größe einer Detektionsfläche des optischen Detektors (25) aufweist.

6. Verfahren nach einem der Ansprüche 1 bis 5 zur Zentriermessung an einer asphärischen Linse als optische Linsenanordnung (10), wobei die asphärische Linse eine asphärische erste Linsenfläche mit einem zentralen sphärischen und einem sich anschließenden asphärischen Anteil aufweist,
bei dem zunächst eine Lage eines Krümmungsmittelpunktes des sphärischen Anteils der asphärischen ersten Linsenfläche bestimmt und anschließend am asphärischen Anteil an einer oder an mehreren Positionen ein Winkel zwischen der ersten Linsenfläche und der optischen Achse des Messstrahls (26, 27, 28) und gleichzeitig ein Winkel zwischen einer zweiten Linsenfläche der asphärischen Linse und der optischen Achse des Messstrahls (26, 27, 28) gemessen werden.

7. Verfahren nach einem der Ansprüche 1 bis 6,
**dadurch gekennzeichnet,**
**dass** die optische Linsenanordnung (10) für die Vermessung auf einem Drehtisch (40) gelagert und um eine Rotationsachse (41) gedreht wird, um die Winkel zwischen den zu vermessenden Linsenflächen und der optischen Achse des Messstrahls (26, 27, 28) an mehreren Positionen auf einer Kreislinie oder einem Abschnitt einer Kreislinie um die Rotationsachse (41) zu bestimmen.

8. Verfahren nach Anspruch 7,
**dadurch gekennzeichnet,**
**dass** die optische Linsenanordnung (10) für die Vermessung um mindestens 180° um die Rotationsachse (41) gedreht wird.

## Claims

1. A method for the measurement of optical lens surfaces, in particular for the centring measurement on aspherical lenses, wherein
- an optical measuring beam (26, 27, 28) is created by an extended light source (21), is collimated via an optical arrangement (23), is directed onto a first lens surface of an optical lens arrangement (10) that is to be measured and, after reflection at the first lens surface to be measured, is detected with at least one locally resolving optical detector (25),
- wherein an aperture (24) limiting the optical measuring beam (26, 27, 28) is inserted between the light source (21) and the optical detector (25), which aperture acts as a vignetting field diaphragm and is projected blurred on the optical detector (25) as a first light spot (26a) by the measuring beam (26, 27, 28) and is detected by the optical detector (25),
- from an intensity distribution of the first light spot (26a) on the optical detector (25) and a displacement of the light spot (26a) with respect to a reference position (zero position), an angle between the first lens surface to be measured and an optical axis of the measuring beam is determined at a point of intersection of the optical axis of the measuring beam with the first lens surface to be measured,
**characterised in that**,
at the same time as the detection of the first light spot (26a), at least a second light spot (27a) is also detected with the optical detector (25), which is received by reflection of the measuring beam (26, 27, 28) at the second lens surface of the optical lens arrangement (10) that is to be measured and,
from an intensity distribution of the second light spot (27a) on the optical detector (25) and a displacement of the light spot (27a) with respect to the reference position (zero position), an angle between the second lens surface to be measured and the optical axis of the measuring beam (26, 27, 28) is determined at the point of intersection of the optical axis of the measuring beam with the second lens surface to be measured.

2. The method according to claim 1,
**characterised in that**,
in the event of a distinguishability of the first (26a) and second light spot (27a) on the optical detector (25) that is not sufficient for the determination of the angles, the optical lens arrangement (10) is shifted perpendicular to the optical axis, until the light spots (26a, 27a) can be sufficiently distinguished.

3. The method according to claim 1 or 2,
**characterised in that**
a diaphragm with a fixed or adjustable diaphragm opening is used as the aperture (24) limiting the measuring beam (26, 27, 28).

4. The method according to any one of claims 1 to 3, **characterised in that**
an autocollimating optics is used as the optical arrangement (23).

5. The method according to any one of claims 1 to 4, **characterised in that**
the extended light source (21) is provided by a luminous surface which at least has the size of a detection area of the optical detector (25).

6. The method according to any one of claims 1 to 5 for the centring measurement on an aspherical lens as the optical arrangement (10), wherein the aspherical lens comprises an aspherical first lens surface with a central spherical part and an adjacent aspherical part, wherein a position of a centre of curvature of the spherical part of the aspherical first lens surface is first determined and then an angle between the first lens surface and the optical axis of the measuring beam (26, 27, 28) and at the same time an angle between a second lens surface of the aspherical lens and the optical axis of the measuring beam (26, 27, 28) are measured on the aspherical part at one or more positions.

7. The method according to any one of claims 1 to 6,
**characterised in that**
the optical arrangement (10) is mounted on a rotary table (40) for the measurement and is rotated about an axis of rotation (41), in order to determine the angles between the lens surfaces to be measured and the optical axis of the measuring beam (26, 27, 28) at a plurality of positions on a circle line or a section of a circle line about the axis of rotation (41).

8. The method according to claim 7,
**characterised in that**
the optical lens arrangement (10) is rotated for the measurement by at least 180° about the axis of rotation (41).

## Revendications

1. Procédé de mesure des surfaces de lentilles optiques, en particulier pour la mesure centrée sur des lentilles asphériques, pour lequel
- un faisceau de mesure (26, 27, 28) optique est produit avec une source lumineuse étendue (21) est collimaté par le biais d'un système optique (23), est dirigé sur une première surface de lentille à mesurer d'un système optique de lentilles (10) et est saisi après réflexion sur la première surface de lentille à mesurer avec au moins un détecteur (25) optique à résolution locale,
- sachant qu'entre la source lumineuse (21) et le détecteur optique (25) est inséré une ouverture (24) limitant le faisceau de mesure optique (26, 27, 28), qui agit en tant que diaphragme de champ de vignettage et est reproduit par le faisceau de mesure (26, 27, 28) de façon floue en tant que première tache lumineuse (26a) sur le détecteur optique (25) et est saisi avec le détecteur optique (25),
- un angle entre la première surface de lentille à mesurer et un axe optique du faisceau de mesure est déterminé au point d'intersection de l'axe optique du faisceau de mesure avec la première surface de lentille à mesurer à partir d'une répartition d'intensité de la première tache lumineuse (26a) sur le détecteur optique (25) et d'un déplacement de la tache lumineuse (26a) par rapport à une position de référence (position zéro),
au moins une deuxième tache lumineuse (27a) est également saisie simultanément à la saisie de la première tache lumineuse (26a) avec le détecteur optique (25), qui est reçue par réflexion du faisceau de mesure (26, 27, 28) sur une deuxième surface de lentille à mesurer du système optique de lentilles (10), et
un angle entre la deuxième surface de lentille à mesurer et l'axe optique du faisceau de mesure (26, 27, 28) est déterminé au point d'intersection de l'axe optique du faisceau de mesure avec la deuxième surface de lentille à mesurer à partir d'une répartition d'intensité de la deuxième tache lumineuse (27a) sur le détecteur optique (25) et d'un déplacement de la tache lumineuse (27a) par rapport à la position de référence (position zéro).

2. Procédé selon la revendication 1,
***caractérisé en ce que***
le système optique de lentilles (10) pour une discernabilité non suffisante de la première (26a) et de la deuxième tache lumineuse (27a) pour la détermination des angles sur le détecteur optique (25) est déplacé perpendiculairement à l'axe optique jusqu'à ce que les taches lumineuses (26a, 27a) puissent être suffisamment discernées.

3. Procédé selon la revendication 1 ou 2,
***caractérisé en ce qu'***
un diaphragme avec une ouverture de diaphragme fixe ou réglable est utilisé en tant qu'ouverture (24) limitant le faisceau de mesure (26, 27, 28).

4. Procédé selon l'une quelconque des revendications 1 à 3,
***caractérisé en ce qu'**un*
système optique d'autocollimation est utilisé en tant que système optique (23).

5. Procédé selon l'une quelconque des revendications 1 à 4,
***caractérisé en ce que***
la source lumineuse (21) étendue est fournie avec une surface lumineuse, qui comporte au moins la taille d'une surface de détection du détecteur optique (25).

6. Procédé selon l'une quelconque des revendications 1 à 5 pour la mesure centrée sur une lentille asphérique en tant que système optique de lentilles (10), sachant que la lentille asphérique comporte une première surface de lentille asphérique avec une partie centrale sphérique et une partie asphérique se raccordant,
pour lequel une position d'un point central de courbure de la partie sphérique de la première surface de lentille asphérique est d'abord déterminée et sont mesurés ensuite un angle entre la première surface de lentille et l'axe optique du faisceau de mesure (26, 27, 28) sur une ou plusieurs positions et simultanément un angle entre une deuxième surface de lentille de la lentille asphérique et l'axe optique du faisceau de mesure (26, 27, 28).

7. Procédé selon l'une quelconque des revendications 1 à 6,
***caractérisé en ce que***
le système optique de lentilles (10) pour la mesure est logé sur une table rotative (40) et est tourné autour d'un axe de rotation (41) pour déterminer l'angle entre les surfaces de lentilles à mesurer et l'axe optique du faisceau de mesure (26, 27, 28) à plusieurs positions sur une ligne circulaire ou une section d'une ligne circulaire autour de l'axe de rotation (41).

8. Procédé selon la revendication 7,
***caractérisé en ce que***
le système optique de lentilles (10) pour la mesure est tourné d'au moins 180° autour de l'axe de rotation (41).
